# EUROPEAN PATENT APPLICATION

(11) **EP 3 412 948 A1**
(43) Date of publication of application: **12.12.2018**
(21) Application number: 18176822.7
(22) Date of filing: 08.06.2018
(51) Int. Cl.: F16L 5/10, F16L 55/11, H02G 3/08

(54) **PLUG FOR INSERTION IN A CONDUIT AND FOR HOLDING A PIPE, TUBE OR CABLE**

(30) Priority: 09.06.2017 NL 1042423
(71) Applicant: Beele Engineering B.V., 7122 NZ Aalten (NL)
(72) Inventor: Beele, Johannes Alfred, 7122 NZ Aalten (NL)
(74) Representative: Hoffmann Eitle

(57) **Abstract**

Plug (5) having a distal side (8) for insertion in a conduit (3) and a proximal side (9) for pushing the plug (5) during inserting the distal side (8) into the conduit (3), the plug (5) defining a longitudinal direction between the distal side (8) and the proximal side (9), the plug (5) having at least one of a proximal opening (6) in the proximal side (8) and a distal opening (6) in the distal side (9) as entrance of a channel (10) that extends in longitudinal direction and for having a pipe, tube or cable (4) occupying a part of a transverse cross-section of the opening (6), the channel (10) having a dead end formed by a layer (11) of plug-material that extends in the transverse direction, the layer (11) being penetrable or removable by inserting a pipe, tube or cable (4) into the opening (6) and pushing it through the channel (10).

## Description

The disclosure relates to a plug for insertion into a conduit. Often at least one pipe, tube or cable needs to be pulled through a conduit. Preferably, a plug is then used for sealing off remaining space in the conduit.

Often, the conduit also needs to be fully sealed off before a pipe, tube or cable is pulled through the conduit. This requires the availability of a blind plug. When a pipe, tube or cable needs to be pulled through the conduit, the blind plug is removed, and another plug having channels for sealingly hosting such a pipe, tube or cable is inserted into the conduit. Thus, two plugs are required; one blind plug and one plug having those channels. The latter plug necessarily is a multi-part plug.

Not only the additional costs for having two plugs available is an issue, also the extra administration for having these two plugs available, the additional time for first inserting a blind plug, then removing the blind plug, and then after pulling or pushing through a pipe, tube or cable, inserting a plug that seals off the remaining space in the conduit complicates the achievement of a conduit, having at least one pipe, tube or cable running through it, and the remaining space sealed off. It is also very cumbersome to fit the final plug around the pipe, tube or cable and requires, for instance, that the pipe, tube or cable is positioned such that the channels in the plug can be at positions which correspond to the positions of the pipe, tube or cable in the conduit. This requires much advanced planning and reduces flexibility for re-planning at a later stage. Such a plug is usually of an elastic material, such as rubber.

There is a need to provide an easier solution for the constellation as described above.

### Summary of the invention

Provided is a plug having a distal side for insertion in a conduit and a proximal side for pushing the plug in a longitudinal direction thereof during inserting the distal side into the conduit. A longitudinal direction may be defined between the distal side and the proximal side. The plug has at least one of a proximal opening in the proximal side and a distal opening in a distal side as entrance of a channel. Such a channel may extend in the longitudinal direction and is ideally suitable for having a pipe, tube or cable occupying a part of a transverse cross-section of the opening. The channel has a dead end formed by a layer of plug-material. The layer is penetratable or removable by inserting a pipe, tube or cable into the opening and pushing it through the channel. Advantageously, only one plug is required for firstly having a blind plug and secondly a plug that seals the space which would without that plug be present in the conduit after the pipe, tube or cable has been pushed through the conduit, and through the respective channel.

In an embodiment the plug has a plurality of proximal openings in the proximal side and/or a plurality of distal openings in the distal side. This allows for more pipes, tubes or cables to be pulled through the conduit and the plug.

In an embodiment, the plug only has a plurality of proximal openings in the proximal side. This is preferable, as pushing any pipe, tube or cable into one of those openings, and pushing it through a channel, cannot negatively affect the firm position of the plug in the conduit. Particularly when the plug is provided at the proximal side with a flange that remains outside the entrance of the conduit, the pushing through the channel and penetrating or removing the layer will not cause any re-positioning of the plug.

In an embodiment, the plug only has a plurality of distal openings in the distal side. This can be advantageous when the plug will be inserted from a different direction than from which cables will be entered into the channels. A lengthy plug having a number of fins is then better to prevent the plug from being moved out of the conduit.

In an embodiment, each layer is flush with the distal side or with the proximal side.

In an embodiment, the distal end/or proximal side is provided with a protuberance or a cavity for indicating the presence of the layer and the respective channel that can be entered by a pipe, tube or cable once the layer is penetrated or removed. This facilitates penetrating or removing the layer from a side that does not have openings of the channels. Such a protuberance may be ring-shaped and surround the layer. However, it is also conceivable that such a protuberance is part of the layer. Such a cavity may also be ring-shaped and, for instance, have an outer diameter that corresponds to the inner diameter of the channel at that side of the plug. However, it is also possible that the cavity corresponds to a cross-section of the channel. Then the cavity may have a diameter that corresponds to the diameter of the channel at that side of the plug.

In an embodiment, the plug has at least one distal opening in the distal side and at least one proximal opening in the proximal side. Advantageously, the blind plug can be used, whilst still having the flexibility for deciding from which side of the plug a pipe, tube or cable will be pushed through, or pulled through, one of its channels.

In an embodiment, each channel extends from either the distal opening or the proximal opening at least up to the layer. This provides maximum guidance of the pipe, tube or cable in the channel before the layer is penetrated or removed by further pushing the pipe, tube or cable through the channel. Further, it potentially offers maximal length along the pipe, tube or cable can be clamped in the channel, if the channel narrows towards the layer. This potentially leads to optimal sealing integrity.

In an embodiment, the layer is at a position along a longitudinal direction that is at a distance from the distal side and at a distance from the proximal side. This combines flexibility as to from which side a part, tube or cable will be pushed through the channel, and still have a suitable length for guiding and possibly clamping the pipe, tube or cable in the channel. The channel may narrow toward the layer and (thus) widen away from the layer.

In an embodiment the layer is provided at a side thereof in the channel with a centrally positioned thickened portion around which an end of a pipe or tube can be placed when removing a penetrating layer. This prevents the layer from being torn across the diameter of the channel and promotes the formation of a circular tear close to or at the inner circumference of the channel. Consequently, the opening suitably corresponds to the outer diameter of the pipe, tube or cable, and often ensures that also sealing integrity is present at the opening as freshly formed by penetrating or removing the layer.

In an embodiment the plug has at least in one of the distal and proximal ends a plurality of openings arranged along imaginary concentric rings. This provides for optimal use of the space available in the conduit and through the plug for holding a number of pipes, tubes or cables. Possible stresses in the plug can homogeneously be distributed, so that few peaks in stress occur, if any at all, and thus possibly also no or only little stress relaxation will take place. This allows for a long lasting sealing integrity and thus a long lifetime of the plug in use.

In an embodiment the plug has in at least one of the distal and proximal ends a plurality of openings arranged in a pattern of imaginary rows and columns. This allows for arranging a number of pipes, tube or cables in a very organized, recordable and easily identifiable manner. For instance, it is possible to allocate coordinates in relation to horizontal and vertical positions.

In an embodiment each channel is at least partly cone-shaped having further away from the layer a larger cross-sectional dimension than adjacent the layer. On the one hand this provides for easy entrance of a pipe, tube or cable into an opening and channel, and on the other hand, this provides potentially for sealingly holding that pipe, tube or cable in the channel, particularly close to a position of the layer.

In an embodiment the plug has multiple longitudinal segments and at least one fully open through-channel at a plane where the longitudinal segments meet in an assembled condition of the plug. Such a plug can be applied in a conduit through which already at least one pipe, tube or cable extends. Advantageously, later on, more pipes, tubes or cables can be pushed through the conduit by having these entering a respective opening, pushing these through the respective channels, and removing or penetrating the respective layers.

In an embodiment the plug has at least two ribs extending in a circumferential direction and having tops spaced apart in the longitudinal direction. Such a plug provides easy insertion combined with relatively high sealing integrity at the circumference of the plug.

In an embodiment the plug is at the proximal side provided with a flange having outer dimensions in circumferential direction which exceed the outer dimensions in circumferential direction of the plug between the proximal and distal end of the plug. Such a plug can firmly be pushed into the conduit, without a chance that the plug is pushed too deeply into the conduit and possibly even out of the conduit at the other end thereof. The flange will abut against an outer rim of the conduit. Preferably, the outer diameter of the flange is large enough to facilitate an easy removal, if only partly, out of the conduit, should this be required, for instance for facilitating entrance of another pipe, tube or cable in a plug that already holds some of those.

The disclosure and aspects thereof are further explained with reference to the drawing, in which:
Fig. 1 shows an embodiment of a plug about to be inserted into a conduit and an embodiment of a plug as inserted in a conduit having a number of pipes, tubes, cables inserted into openings thereof;
Fig. 2 shows again the insertion of a tube in an opening of an embodiment of a plug according to the present disclosure;
Fig. 3 shows the removal of a layer of plug material at the distal side by insertion of a tube into an opening at the proximal side as shown in Fig. 2;
Fig. 4 shows in a perspective and semi-exploded view an embodiment of a plug in use and in an encircled view a blown-up portion thereof;
Fig 5a, 5b and 5c show different sides of an embodiment of a plug;
Fig. 6a shows a proximal side of an embodiment of a plug and indicates where a cross section is provided of a plug to end up with a cross sectional view as shown in Fig. 6b which indicates by encircling a part of that cross sectional view what is in detail shown in Fig. 6c; and
Fig. 7a shows a proximal side of an embodiment of a plug and indicates where a cross section is provided of a plug to end up with a cross sectional view as shown in Fig. 7b which indicates by encircling a part of that cross sectional view what is in detail shown in Fig. 7c; and

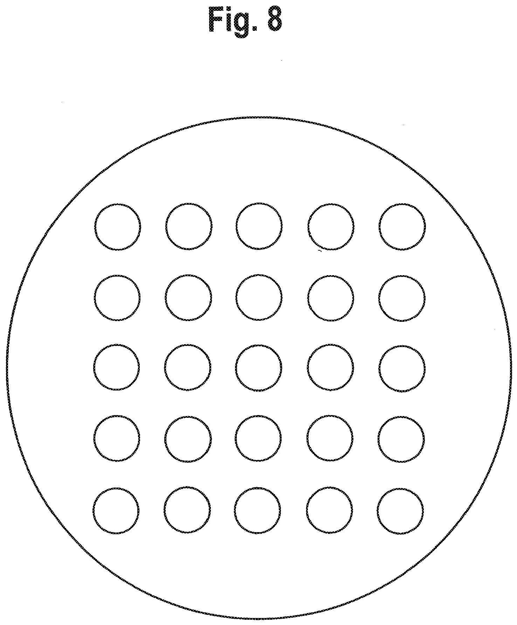

Fig. 8 shows an alternative arrangement of openings in an embodiment of a plug according to the present disclosure.

In the drawing, like features are provided with like references.

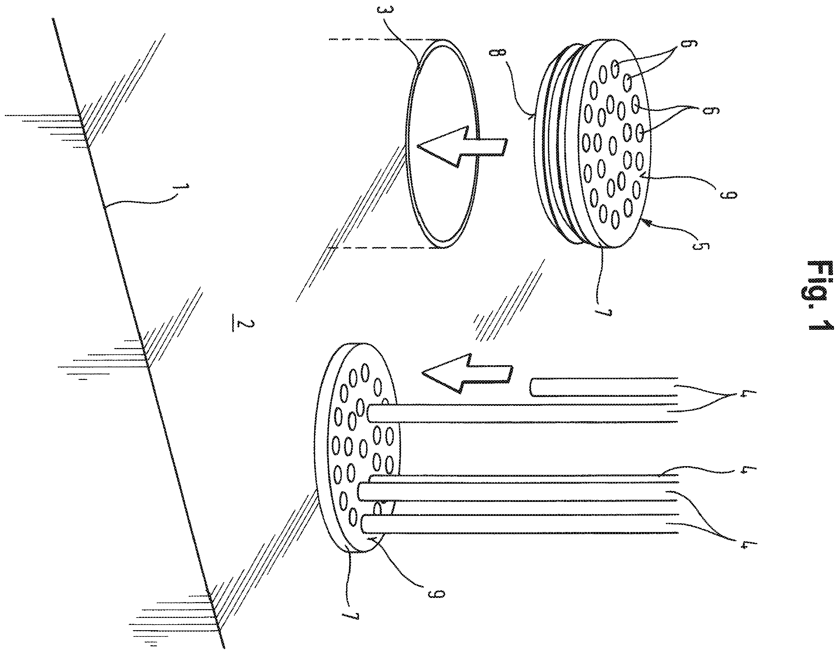

As an introduction, Fig. 1 shows an edge 1 of a slab of concrete 2 in which conduits 3 are embedded. Through the conduit 2, a pipe, tube or cable 4 can extend through the slab of concrete 2. The plug 5 is provided for inserting in conduit 3 and for having in a number of the openings 6 a pipe, tube or cable 4 inserted therein. As shown, first the plug 5 will be inserted in the conduit 3, and secondly the pipes, tubes or cables 4 will be inserted into the openings 6 of the plug 5. It is also possible to first push or pull the respective pipes, tubes or cables through the plug 5 to then insert the plug 5 in the conduit 3. In the embodiment of a plug shown in Fig. 1, the plug is provided with a flange 7 that prevents the plug 5 from being too deeply inserted in conduit 3. The flange 7 also facilitates removal of the plug out of the conduit, should this be required.

In the following, reference will only be made to the insertions of tubes into the openings 6 of plug 5. However, it should be borne in mind that the plug 5 is also suitable for receiving pipes or cables into the openings. Of course, also a mixture of a cable and a tube or pipe may need to, and can, be extended through the conduit, and then occupy openings 6 in plug 5. Plug 5 is particularly useful for having extending therethrough tubes which will guide and or house (bundles of) optical cables, for instance, for telecommunication purposes. These tubes are relatively stiff and very well defined in terms of internal and outer diameters. These tubes also need to have a certain stiffness as optical fiber cables cannot bent too much.

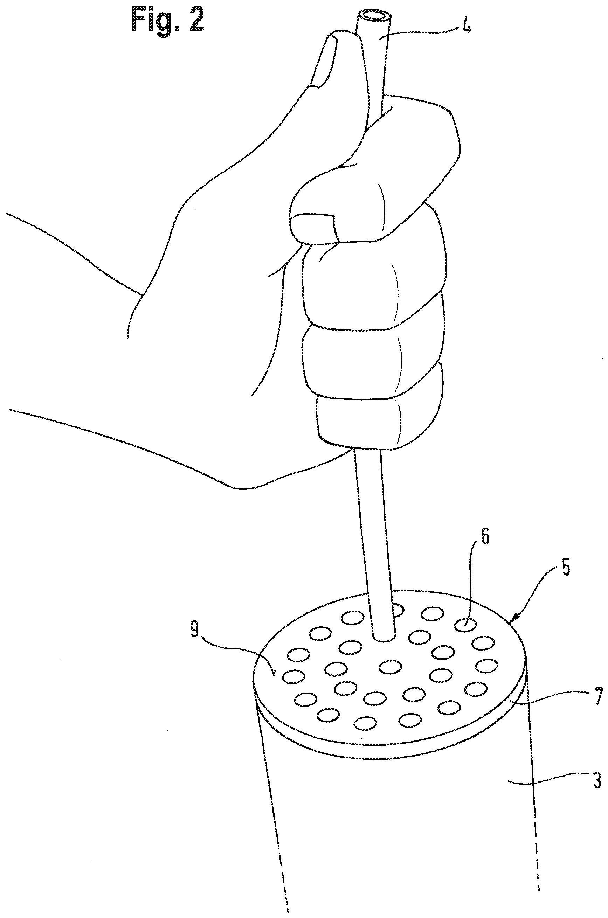

In Fig. 2 it is shown how a plug 5 has been inserted into a conduit 3 and how a tube 4 may be pushed through an opening 6. Each opening 6 functions as an entrance of a channel. In this example, plug 5 has a flange 7 that prevents the plug from being too deeply inserted into conduit 3. In fact, flange 7 abuts against an annular rim (not shown) of conduit 3, and provides as such also stability when tube 4 is inserted into one of the openings 6 and pushed through a channel

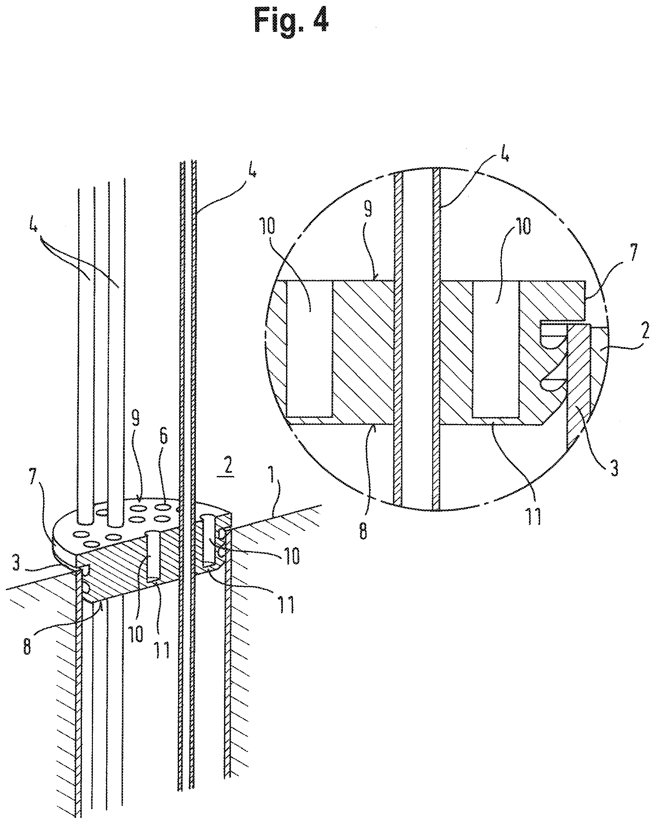

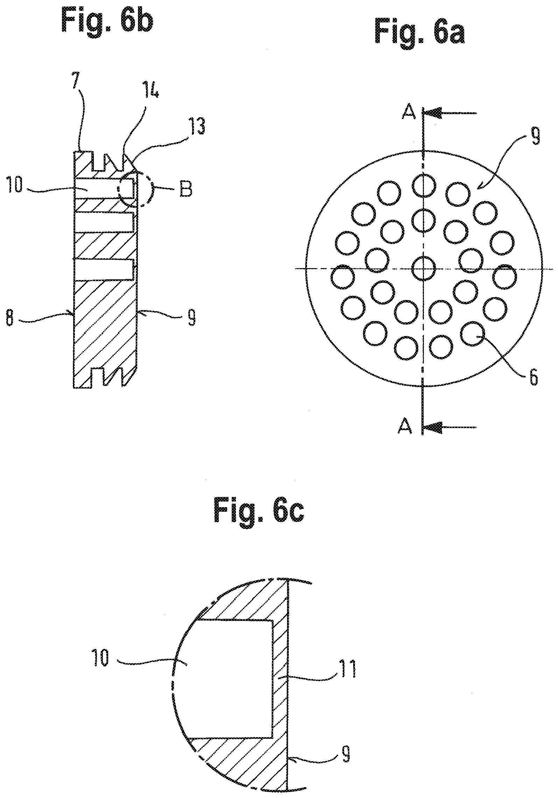

As can be derived from the above, the plug 5 has a distal side 8 for insertion in the conduit 3 and a proximal side 9 for pushing the plug during inserting the distal side 8 into the conduit 3. A longitudinal direction of plug 5 runs from the distal side 8 to the proximal side 9, or vice versa. The opening 6 as shown on the proximal side forms an entrance of a channel 10 (see Fig. 4 and Fig. 6a - 6c) that extends along a longitudinal direction. Tube 4 can thus occupy a part of a transverse cross-section of the opening 6. Once the tube has been pushed through the opening, it will also occupy a part of the transverse cross-section of the channel 10.

A number of the channels 10 of plug 5 of the present disclosure have a dead end formed by a layer 11 of plug material that extends in the transverse direction. For the sake of clarity, the transverse direction is in this constellation a direction that is transverse to the longitudinal direction. Ideally, the transverse direction is perpendicular to the longitudinal direction. Again, for the sake of clarity, the longitudinal direction ideally coincides with a direction along which the shortest distance through the plug 5 is measured between the distal side 8 and proximal side 9 of the plug 5.

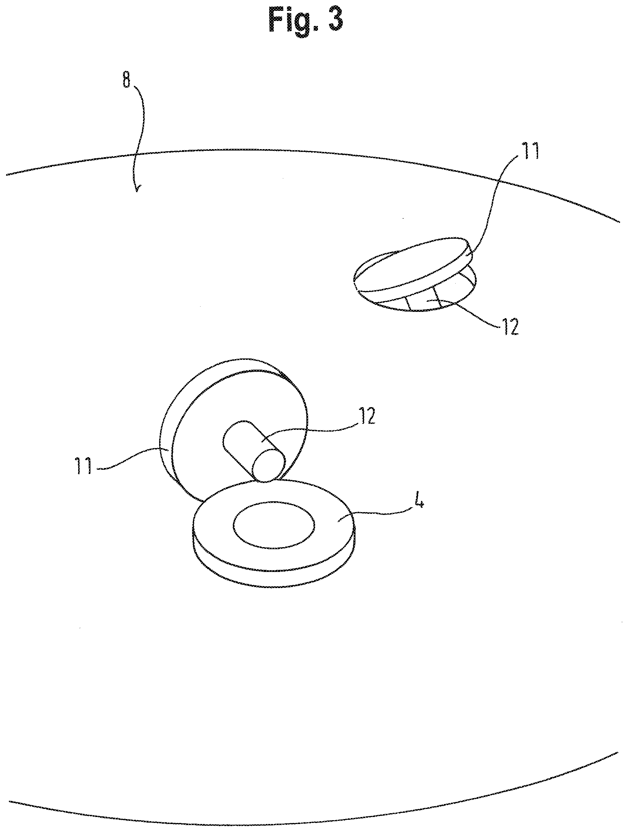

The layer 11 is penetrable or removable by inserting a tube 4 into the opening 6 and pushing it through the channel 10. Fig. 3 shows a result of this feature of the plug 5. Shown is the distal side 8 where a layer 11 of plug material is removed by insertion of the tube 4 into the opening 6 and put through the channel 10.

Fig. 4 shows a perspective and a semi-exploded view of a plug 5 inserted in a conduit 3 through which a number of tubes 4 have been inserted into the openings 6 and pushed through the dead ends of channel 10. The dead ends were formed by a layer 11 in those channels 10 which have been changed into channels that are now fully occupied by a tube 4. Upon pushing the tube 4 through the dead end (layer 11) the channel became a through channel 10. The circular window in Fig. 4 provides a magnified view of the cross section shown in the left-hand perspective and exploded view.

In the embodiment shown, it is clear that each channel 10 extends from the proximal opening up to at least layer 11.

Furthermore, in this example, each layer 11 is shown to be flush with the distal side 8 of the plug 5. In Fig. 3 it is shown that layer 11 may be provided with a centrally positioned thicker portion 12 around which an end of a pipe or tube 4 can be placed when removing or penetrating the layer 11.

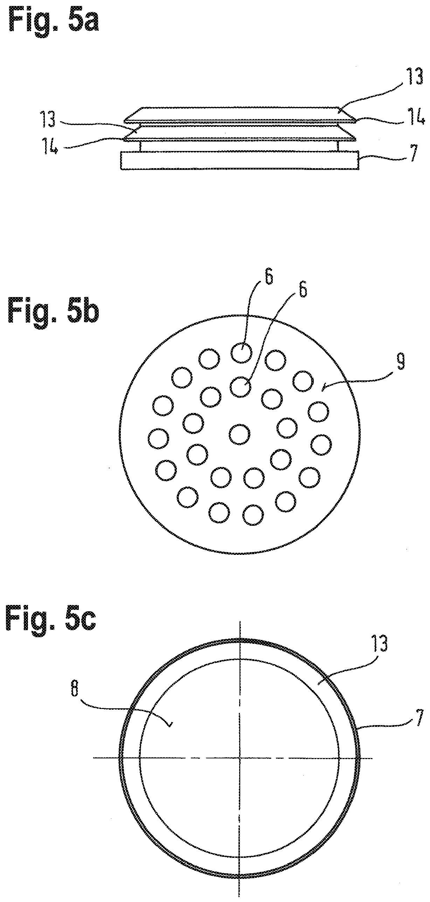

Fig. 5a, 5b and 5c provide respectively a side view of a plug 5; a view of a proximal side of plug 5; and a view of a distal side of plug 5. As shown, plug 5 may have at least two ribs 13 extending in circumferential direction and having tops 14 spaced apart in longitudinal direction.

Fig. 6a shows again a proximal side of an embodiment of a plug 5 and indicates by arrows A how the cross sectional view of Fig. 6b relates to plug 5. Fig. 6c provides an enlarged view of the part encircled and labelled B in Fig. 6b. Clearly, the layer 11 is relatively thin as compared to the length of channel 10. The layer could be in a range of 0,5-2 mm, preferably 0,7-1,4 mm.

Further shown, although not too explicitly, is that each channel 10 is at least partly cone-shaped having at the respective opening 6 a larger cross sectional dimension than adjacent layer 11. Although not shown, it is possible that the cross sections of the channels 10 and the size of the openings 6 are not the same for each channel 10 (opening 6). In other words, the plug may be suitable for accommodating tubes of different diameters.

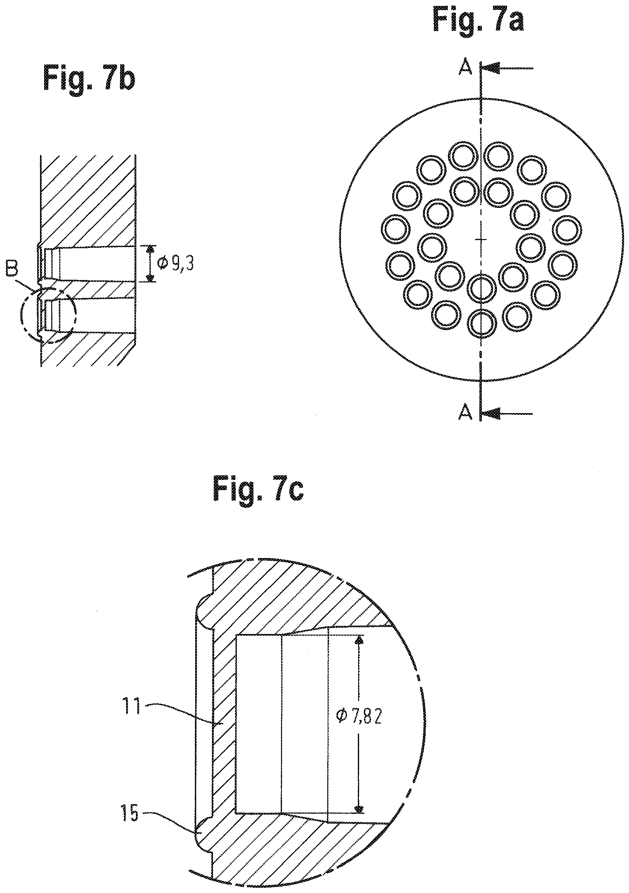

Fig. 7a shows again a proximal side of an embodiment of a plug 5 and indicates again by arrows A how the cross-sectional view of Fig. 7b relates to plug 5. Fig. 7c provides an enlarged view of the part encircled and labelled B in Fig. 7b. In this embodiment, it is clear that at least a part of channel 10 is slightly cone-shaped. The cross sectional dimension of the channel further away from layer 11 and closer to the respective opening 6 is larger than the cross sectional dimension of the channel 10 adjacent layer 11. The cross sectional dimension adjacent the layer 11 is indicated to have a diameter of 7.82 mm. Further, it is noticeable that the side close to layer 11, be it the proximal side or the distal side, is provided with a protuberance 15 for indicating the presence of the layer 11 in a channel 10 that can be entered by a pipe, tube or cable once the layer 11 is penetrated or removed. The protuberance 15, may as shown, encircle the layer 11, i.e. be ring-shaped. However, it is also possible that protuberance 15 corresponds to a part of the layer 11.

Instead of a protuberance 15, the side close to layer 11, be it the proximal or the distal side, may be provided with a cavity for indicating the presence of the layer and a channel that can be entered by a pipe, tube or cable once the layer 11 is penetrated or removed. In analogy to the protuberance 15, the cavity (not shown) may encircle the layer 11 (i.e. be ring-shaped), or where the cavity (not shown) is formed by a position of the layer at a distance from the respective distal or proximal side, the cavity may effectively correspond to a part that will form the channel 11. The cavity may then have a diameter that corresponds to the diameter of the channel 11 at that side of the plug 5.

In a way, any pattern of openings 6 is possible. Fig. 7 shows a preferred embodiment having in the proximal side a plurality of openings 6 arranged in a pattern of imaginary rows and columns. Although this may be preferred for reasons of recordability of specific tubes or cables as extending through the conduit and the plug, for reducing any stresses and for aiming for an equal distribution of stresses it may be preferable that the openings are arranged along imaginary concentric rings.

The disclosure is not limited to the embodiment as described above. Many variations and modifications are possible. Plug 5 may instead of having openings in the proximal side, have, additionally or alternatively, openings in the distal side. Although it is possible that the plug has only one opening, it is preferable that the plug has a plurality of openings, be it in the proximal side, in the distal side, or in both. Although it has been shown that the layers 11 may be flush with the respective side to which it is adjacent, it is also possible that the layer 11 is at a position along a longitudinal direction that is at a distance from the distal side 8 and at a distance from the proximal side 9. It is thus possible that the layer is in the middle of the channel or at a smaller distance from one side and a larger distance from the other side.

As indicated above, it is possible that the plug has a plurality of openings both in the proximal side and in the distal side. It is possible that these are provided in an alternating pattern wherein a channel having its opening on the distal side has as neighbor a channel that has its opening on the proximal side. Although it is not likely that each of these channels will in the end be occupied, as it is likely that pipes, tubes or cables are always entered from only one side of the plug 5, the presence of channels which are essentially closed off at the side from which pipes, tubes or cables enter the channels, provide more resilience to the plug. This may prove useful when more and more pipes, tubes and cables are indeed entered in the channels on one side of the plug 5.

As shown, the plug may be provided with two fins. However, it is also possible to only have one fin, or more than two fins.

Although it has been shown that the layer is provided with its centrally positioned thicker position 12 around which an end of a pipe or tube can be placed when removing or penetrating the layer 11, it is alternatively possible that the layer 11 is provided with a centrally positioned thinner portion through which a cable can more easily penetrate the layer 11.

It is further possible that the plug comprises multiple longitudinal segments and at least one fully open through-channel, so that the plug can be used in a conduit in which a pipe, tube or cable extends before the plug is inserted into the conduit. In assembled and inserted condition the through-channel is occupied by that pipe tube or cable. The openings of channels having dead ends can be used later on for hosting more tubes in the conduit, without having to change the plug.

The layer is of plug material, but not necessarily of the same material of which the plug is made. It is thus possible that first a plug having through-channels is made, and that then each channel is provided with a material that forms a plug in that channel and therewith a layer and a dead end of that channel. Preferably though the layer forming the dead end is integrally connected to a wall of the channel. The plug including the dead ends may be a single piece plug, produced by injection moulding a rubber resin, for instance based on silicon, and then optionally vulcanized. It is also possible to produce the plug of a thermally expandable rubber (resin). All these variations and modifications are considered to fall within the framework of the present disclosure as further defined by the appending claims.

## Claims

1. Plug having a distal side for insertion in a conduit and a proximal side for pushing the plug in a longitudinal direction during inserting the distal side into the conduit, the plug having at least one of a proximal opening in the proximal side and a distal opening in the distal side as entrance of a channel, the channel having a dead end formed by a layer of plug-material, the layer being penetrable or removable by inserting a pipe, tube or cable into the opening and pushing it through the channel.

2. A plug according to claim 1, wherein the plug has a plurality of proximal openings in the proximal side and/or a plurality of distal openings in the distal side.

3. A plug according to claim 1, wherein the plug only has a plurality of proximal openings in the proximal side.

4. A plug according to claim 1, wherein the plug only has a plurality of distal openings in the distal side.

5. A plug according to any one of the preceding claims,
wherein each layer is flush with the distal side or with the proximal side.

6. A plug according to any one of the previous claims,
wherein the distal or proximal side is provided with a protuberance or a cavity for indicating the presence of the layer and the respective channel that can be entered by a pipe, tube or cable once the layer is penetrated or removed.

7. A plug according to claim 6, wherein the protuberance encircles the layer, or wherein the protuberance corresponds to the layer.

8. A plug according to claim 6, wherein the cavity encircles the layer, or wherein the cavity is formed by a positioning of the layer at a distance from the respective distal or proximal side.

9. A plug according to claim 1 or 2, wherein the plug has at least one distal opening in the distal side and at least one proximal opening in the proximal side.

10. A plug according to any one claims of 1-9, wherein each channel extends from either the distal opening or the proximal opening at least up to the layer.

11. A plug according to any one of claims 6-10, wherein the layer is at a position that is at a distance from the distal side and at a distance from the proximal side.

12. A plug according to any one of claims 1-11, wherein the layer is at a side thereof in the channel provided with a centrally positioned thicker portion around which an end of a pipe or tube can be placed when removing or penetrating the layer.

13. A plug according to any one of claims 1-11, wherein the layer is at a side in the channel provided with a centrally positioned thinner portion through which a cable can penetrate the layer.

14. A plug according to any one of the preceding claims, having in at least one of the distal and proximal ends a plurality of openings arranged along imaginary concentric rings.

15. A plug according to any one of the preceding claims, having in at least one of the distal and proximal ends a plurality of openings arranged in a pattern of imaginary rows and columns.

16. A plug according to any one of the preceding claims, wherein each channel is at least partly cone-shaped, having further away from the layer a larger cross-sectional dimension than adjacent the layer.

17. A plug according to any one of the preceding claims, wherein the plug has multiple longitudinal segments and at least one fully open through-channel at a plane where the longitudinal segments meet in an assembled condition of the plug.

18. A plug according to any one of the previous claims, wherein the plug has at least two ribs extending in circumferential direction and having tops spaced apart in longitudinal direction.
